# EUROPÄISCHE PATENTSCHRIFT

(11) **EP 0 481 269 B1**
(45) Veröffentlichungstag und Bekanntmachung des Hinweises auf die Patenterteilung: **04.12.1996**
(21) Anmeldenummer: 91116507.4
(22) Anmeldetag: 27.09.1991
(51) Int. Cl.: C02F 1/50, C02F 1/72

(54) **Perborat- oder boratfreies Wasseraufbereitungs- und/oder Wasserdesinfektionsmittel, Verfahren zu dessen Herstellung und Verwendung**
Water conditioning agent and/or water germicide without perborate or borate, method for its production and its use
Agent de traitement des eaux et/ou de désinfection sans perborate ou borate, procédé de sa fabrication et son utilisation

(30) Priorität: 16.10.1990 DE 4032782
(43) Veröffentlichungstag der Anmeldung: 22.04.1992
(73) Patentinhaber: Hoelzle & Chelius GmbH, D-63234 Neu-Isenburg (DE)
(72) Erfinder: Affonso, Alvaro, Prof. Dr., W-6380 Bad Homburg (DE)
(74) Vertreter: Lauer, Dieter, Dr.

(56) Entgegenhaltungen:
- EP-A- 0 270 382
- EP-A- 0 304 502
- EP-A- 0 419 841
- EP-A- 0 419 842
- DE-A- 2 826 019
- FR-A- 2 394 496
- FR-A- 2 503 130
- US-A- 4 780 216
- WATER RESEARCH, Band 14, Nr. 12, 1980, Seite 1705, Pergamon Press Ltd.; SCHINK et al.: "Inactivation of F2 virus with ferrate (VI)"

## Beschreibung

Die vorliegende Erfindung betrifft ein perborat- oder boratfreies Wasseraufbereitungs- oder Wasserdesinfektionsmittel auf der Basis mindestens eines Persulfates sowie gegebenenfalls eines Bindemittels und/oder Silikates. Gemäß der Erfindung enthält das Wasseraufbereitungs- oder Wasserdesinfektionsmittel, das in fester Form vorliegt, ein Gemisch, das mindestens ein Erdalkalisalz der Peroxomonoschwefelsäure (Erdalkalisalz der Sulfomonopersäure) und/oder mindestens ein Erdalkalisalz der Peroxodischwefelsäure (a) enthält.

Es ist bereits bekannt, Wasser, insbesondere Schwimmbadwasser, zur Desinfektion mit Perverbindungen zu behandeln, wobei u.a. der Nachteil auftritt, daß zahlreiche Perverbindungen unter den jeweiligen gegebenen Bedingungen relativ rasch zerfallen.

In der EP-B-0 059 978 wurde daher ein Verfahren zur chemischen Aufbereitung, insbesondere zum Entkeimen von Wasser und zum oxidativen Abbau von im Wasser enthaltenen oxidierbaren Verunreinigungen beschrieben, bei dem eine Kombination von quaternären Ammoniumverbindungen, wasserlöslichen Kupfersalzen und/oder Silbersalzen und eine sauerstoffabspaltende Peroxidverbindung dem Wasser zugesetzt wird. Diese Peroxidverbindung kann u.a. auch Kaliumhydrogenmonopersulfat sein. Nachteilig bei diesem Mittel ist u.a., daß Ammoniumsalze in das Wasser gelangen, die in gewissen Konzentrationen gesundheitlich bedenklich sein können, daß Kupfer- und/oder Silberverbindungen schwer abbaubar sind und daß schließlich Verfärbungen des Wassers nach einiger Zeit auftreten. Um diese Nachteile zu beseitigen, wurde in der EU-A-0 136 973 eine Zusammensetzung zur chemischen Aufbereitung von Wasser, insbesondere zum Entkeimen und zur Oxidation von oxidierbaren Verunreinigungen, im Schwimmbadwasser vorgeschlagen, wobei die Zusammensetzung eine Kombination, bestehend aus mindestens einer Peroxiverbindung, mindestens einem Borat oder einer Borsäure und mindestens einem Chelatbildner oder einem Zeolith enthält.

Als Peroxiverbindung können u.a. auch Alkalipersulfat, Natriumperborat, Peroxiphosphate und dergleichen eingesetzt werden.

Borate, Perborate und Borsäure sind jedoch bei Überschreitung gewisser Grenzwerte gesundheitlich im Trink- und Schwimmbadwasser bedenklich, so daß bereits sehr niedrige Grenzwerte für Borate bzw. Borsäurekonzentrationen nach der novellierten Trinkwasserbestimmung (weniger als 1 mg/l) vorgesehen sind. Die Anwesenheit von Schwermetall komplexierenden Verbindungen wie Ethylendiamintetraessigsäure und dergleichen im Trinkwasser ist bei der Übersteigung von gewissen Konzentrationen ebenfalls bedenklich.

Es wurde daher bereits in der DE-OS 38 43 992 vorgeschlagen, Flüssigkonzentrate zum Reinigen, Bleichen und Desinfizieren anzuwenden, die ein oder mehrere lösliche Alkalisalze der Peroxodischwefelsäure enthalten, gegebenenfalls in Kombination mit Silikaten und Verarbeitungshilfsmitteln.

Diese flüssigen Konzentrate sind begrenzt lagerfähig. Bei einer Lagerdauer von ca. 14 Wochen ist jedoch ein bedeutender Verlust von Sauerstoff eingetreten. Die Schwierigkeit besteht vor allem darin, daß bei dem Vorliegen gewisser Verunreinigungen, gewisser Staubpartikel und dergleichen die Lagerfähigkeit in diesem Umfang nicht mehr gegeben ist und ein erheblicher Zerfall eintreten kann.

EP 0 304 502 beschreibt ein Verfahren zur Anreicherung von Flüssigkeiten mit Sauerstoff, in dem der Sauerstoff mittels einem Sauerstoffträger in Form eines Festkörpers eingebracht wird.

Als Sprudeleffekt erzeugende Stoffe enthält der Festkörper Natriumcarbonat oder Natriumperborat mit Zitronensäure bzw. Calciumperoxomonosulfat.

Die US 4 780 216 offenbart eine Zusammensetzung die Calciumhypochlorit und Alkali- oder Erdalkaliperoxodisulfat enthält.

Ziel und Aufgabe der vorliegenden Erfindung war es, ein borat- oder perborat- (oder borsäure-)freies Wasseraufbereitungs- oder Wasserdesinfektionsmittel mit verbesserten Eigenschaften zu finden. Es sollte insbesondere eine gute Lagerfähigkeit aufweisen und/oder bei der Verwendung zur Wasserbehandlung oder Wasserdesinfektion den Sauerstoff nicht sofort abgeben, sondern eine verzögernde Sauerstoffabgabe über einen gewissen Zeitintervall (Retard-Effekt) aufweisen. Das Mittel sollte phosphatfrei oder phosphatarm sein, schwer abbaubare evtl. schädigende Schwermetallionen, vorzugsweise Kupfer- oder Silberionen, nur in einer sehr geringen Gewichtsmenge, vorzugsweise jedoch überhaupt nicht, enthalten. Gesundheitlich bedenkliche Zusätze und dergleichen sollten vermieden werden.

Erfindungsgemäß wurde festgestellt, daß diesen Zielen und Aufgaben ein perborat- oder boratfreies Wasseraufbereitungs- oder Wasserdesinfektionsmittel auf der Basis mindestens eines Persulfates sowie gegebenenfalls eines Bindemittels und/oder Silikates gerecht wird, wobei das Wasseraufbereitungs- oder Wasserdesinfektionsmittel in fester Form vorliegt und mindestens ein Erdalkalisalz der Peroxomonoschwefelsäure (Erdalkalisalz der Sulfomonopersäure) und/oder mindestens ein Erdalkalisalz der Peroxodischwefelsäure (a), (das in Form des neutralen, sauren oder basischen Salzes vorliegt) und mindestens ein Alkalisalz, ausgewählt aus der Gruppe der Alkalisalze der Peroxomonoschwefelsäure und/oder der Alkalisalze der Peroxodischwefelsäure, (b) und mindestens ein Erdalkalihydroxid und/oder mindestens ein Erdalkalioxid und/oder mindestens ein Erdalkalicarbonat (c) und gegebenenfalls Sulfat oder Hydrogensulfat, ausgewählt aus der Gruppe der Alkali- und/oder Erdalkalisulfate oder -hydrogensulfate, (d) enthält

Nach einer bevorzugten Ausführungsform enthält das perborat- oder boratfreie Wasseraufbereitungs- oder Wasserdesinfektionsmittel a, b, c und zusätzlich d, ein Sulfat oder Hydrogensulfat, ausgewählt aus der Gruppe der Alkali- und/oder Erdalkalisulfate und/oder -hydrogensulfate.

Das Mittel enthält vorzugsweise mindestens eine partielles oder stöchiometrisches Umsetzungsprodukt in fester Form aus mindestens einem
b Alkalisalz der Peroxomonoschwefelsäure (Alkalisalz der Sulfomonopersäure) und/oder mindestens einem Alkalisalz der Peroxodischwefelsäure und
c mindestens einem Erdalkalihydroxid und/oder mindestens einem Erdalkalioxid und/oder mindestens einem Erdalkalicarbonat. Bevorzugt werden Calcium- und/oder Magnesiumhydroxid und/oder -carbonat oder Verbindungen, die diese enthalten, eingesetzt. Nach einer Ausführungsform sind Calcium- und/oder Magnesiumhydroxid ganz oder teilweise ersetzt durch Calcium- und/oder Magnesiumoxid oder Verbindungen oder Verbindungsgemische, die diese enthalten, wobei der Wassergehalt bei dem Vermischen gegebenenfalls erhöht werden muß.

Das Mittel enthält bevorzugt somit neben dem Erdalkalisalz der Peroxomonoschwefelsäure und/oder dem Erdalkalisalz der Peroxodischwefelsäure (a) (oder dem Umsetzungsprodukt aus b und c) mindestens ein Alkalisalz, ausgewählt aus der Gruppe der Alkalisalze der Peroxomonoschwefelsäure und/oder der Alkalisalze der Peroxodischwefelsäure, (b) und Sulfat oder Hydrogensulfat, ausgewählt aus der Gruppe der Alkali- und/oder Erdalkalisulfate oder -hydrogensulfate. Dabei können die Bestandteile (b) und (c) durch partielle stöchiometrische, unter- oder überstöchiometrische Umsetzung im Mittel vorhanden sein oder zu (a) zusätzlich später zugesetzt oder damit vermischt werden. Als Alkalisalz der Peroxomonoschwefelsäure oder Peroxodischwefelsäure werden bevorzugt ein Natrium-, Kalium- und/oder Ammoniumsalz der Peroxomonoschwefelsäure und/oder der Peroxodischwefelsäure und/oder ein Alkalisalzgemisch oder ein Doppel- oder Tripelsalz derselben eingesetzt, zugesetzt oder verwendet, wobei im Fall der Verwendung der Salzgemische oder Doppel- oder Tripelsalze ein Bestandteil ein Alkalisalz der Peroxomonoschwefelsäure und/oder Peroxodischwefelsäure und der andere Bestandteil ein anderes neutrales, saures oder schwach alkalisches Salz, vorzugsweise ein Alkalisulfat und/oder Alkalihydrogensulfat (bevorzugt Natrium- oder Kaliumverbindung), ist. Die Anwesenheit der Alkalisulfate und/oder der gebildeten Erdalkalisulfate begünstigen die Retardwirkung und verzögern somit die Umsetzung und stellen somit gleichzeitig einen Puffer dar. Von den Salzen der Peroxomonoschwefelsäure und/oder Peroxodischwefelsäure können sowohl die neutralen als auch die sauren Salze Verwendung finden.

Nach der vorzugsweisen Ausführungsform enthält das Mittel zusätzlich mindestens eine Erdalkaliverbindung, vorzugsweise mindestens ein Erdalkalihydroxid und/oder ein Erdalkalikarbonat und/oder ein -oxid. Bevorzugt werden als Erdalkaliverbindungen die Calcium- und/oder Magnesiumverbindungen und besonders bevorzugt die Carbonate oder Carbonatgemische mit mindestens einem Hydroxid und/oder Oxid eingesetzt. Das Erdalkalihydroxid und/oder Erdalkalicarbonat und/oder Erdalkalioxid kann ganz, vorzugsweise jedoch nur teilweise durch Calcium- und/oder Magnesiumperoxid oder durch Verbindungen ersetzt werden, die diese mit enthalten oder im Gemisch enthalten. Jedoch handelt es sich hierbei um eine nicht bevorzugte Ausführungsform, weil die Lagerstabilität und der Retardeffekt meist ungünstig beeinflußt werden. Bei Verwendung von Calciumoxid oder Calciumperoxid wird dieses vorzugsweise im Gemisch mit anderen Verbindungen, vorzugsweise mit Calciumcarbonat, Magnesiumhydroxid, Calciumhydroxid, Magnesiumcarbonat oder Magnesiumoxidhydrat, eingesetzt. Bei der Verwendung von Calcium- oder Magnesiumoxid oder -peroxid sollte jedoch der Gehalt des dem Mittel zugesetzten Wassers zweckmäßig erhöht werden.

Der Wassergehalt des Mittels beträgt bevorzugt 0,05 bis 6 Gew.-% (bezogen auf die Gesamtmischung), vorzugsweise 0,1 bis 4,5 Gew.-%, wobei der Wassergehalt auf das fertige feste Mittel bezogen ist und bei der Herstellung zwischenzeitlich höhere Werte annehmen kann. In besonderen Fällen (z.B. bei Mitverwendung hygroskopischer anorganisch-chemischer Verbindungen mit hohem Kristallwassergehalt und dergleichen) kann der Wassergehalt bis zu 9 Gew.-% (bezogen auf das Gewicht der Gesamtmischung) betragen.

Das Mittel weist bevorzugt einen pH-Wert von 4,5 bis 10, vorzugsweise 5 bis 9, auf. Dabei ist der pH-Wert bevorzugt in einer 0,1 gew.-%igen wäßrigen Lösung oder Dispersion gemessen. In besonderen Anwendungsfällen kann der pH-Wert des Mittels bis auf unter 4,5, z.B. bis auf einen pH-Wert von 2, eingestellt werden.

Das Mittel enthält als Erdalkaliverbindungen bevorzugt Calcium- und/oder Magnesiumverbindungen und/oder als Alkaliverbindungen Natrium- und/oder Kaliumverbindungen und/oder Ammoniumverbindungen, wobei die Ammoniumverbindungen für bestimmte Anwendungsfälle (z.B. Trinkwasserbehandlung) nicht oder nur in einer geringen Konzentration zur Anwendung gelangen.

Nach einer bevorzugten Ausführungsform enthält das Mittel zusätzlich ein Ferrat, ausgewählt aus der Gruppe der Alkali- und/oder Erdalkaliferrate, und weist einen pH-Wert von 7 bis 10, vorzugsweise 7,5 bis 9, auf. Nach einer weiteren bevorzugten Ausführungsform ist das Gewichtsverhältnis von dem Erdalkalisalz der Peroxomonoschwefelsäure und/oder dem Erdalkalisalz der Peroxodischwefelsäure zu dem Ferrat 5 : 1 bis 1 : 5, vorzugsweise 1 : 0,6 bis 1 : 0,005.

Nach einer weiteren bevorzugten Ausführungsform enthält das Mittel zusätzlich ein Bindemittel, insbesondere ein anorganisch-chemisches Bindemittel, vorzugsweise ein Alkalisilikat. Nach einer Ausführungsform wird als Bindemittel Zement, Beton oder ein Gemisch von Magnesiumchlorid mit Magnesiumoxid verwendet. Dabei wird nach dieser Ausführungsform die Mischung so eingestellt, daß die Beton- bzw. Zementstruktur oder Magnesiumzementstruktur in Form von Kugeln, Tabletten und dergleichen im wesentlichen erhalten bleibt, jedoch porös wird und das Erdalkalisalz, vorzugsweise Calcium- oder Magnesiumsalz, der Peroxomonoschwefelsäure und/oder der Peroxodischwefelsäure und die vorhandene Alkaliverbindung mit einer erhöhten Retardwirkung bzw. Langzeitwirkung unter Sauerstoffabgabe umgesetzt wird. Nach einer anderen Ausführungsform wird das erfindungsgemäße Wasseraufbereitungs- oder Wasserdesinfektionsmittel in einen porösen Körper eingearbeitet und/oder mit einer Hülle versehen, die wasserdurchlässig ist oder sich bei Hinzufügung von Wasser auflöst.

Nach einer bevorzugten Ausführungsform enthält das Mittel zusätzlich mindestens eine kristallwasserhaltige und/oder wasserhaltige chemische Verbindung (vor dem Zusatz und/oder der Vermischung der Bestandteile der wasser- und/oder kristallwasserhaltigen Verbindung), vorzugsweise eine anorganisch-chemische kristallwasserhaltige Verbindung.

Dabei kann das dem Mittel zugesetzte Wasser ganz oder teilweise durch mindestens eine kristallwasserhaltige oder wasserhaltige anorganisch-chemische Verbindung ersetzt werden. Bevorzugt werden dabei kristallwasserhaltige oder wasserhaltige Verbindungen ausgewählt, die das Wasser nicht oder nicht wesentlich belasten, vorzugsweise Na₂SO₄ x 10 H₂O, Na₂CO₃ x 10 H₂O und/oder CaCl₂ x 6 H₂O.

Nach einer weiteren Ausführungsform wird dem Mittel zusätzlich mindestens eine hygroskopische Verbindung zugesetzt.

Nach einer bevorzugten Ausführungsform ist in dem fertigen oder umgesetzten erfindungsgemäßen Gemisch des Wasseraufbereitungs- oder Wasserdesinfektionsmittels die Gewichtsmenge von (b) größer als von (a). Dabei ergeben sich nach einer Ausführungsform Gewichtsverhältnisse von b : a von 1 zu kleiner als 0,5, vorzugsweise von 1 zu kleiner als 0,05.

Die Erfindung betrifft weiterhin ein Verfahren zur Herstellung eines perborat- oder boratfreien Wasseraufbereitungs- oder Wasserdesinfektionsmittels auf der Basis mindestens eines Persulfates sowie gegebenenfalls eines Bindemittels und/oder Silikates.

Gemäß der Erfindung wird das Wasseraufbereitungs- und/oder Wasserdesinfektionsmittel durch partielle oder stöchiometrische Umsetzung aus mindestens einem
b Alkalisalz der Peroxomonoschwefelsäure (Alkalisalz der Sulfomonopersäure) und/oder mindestens einem Alkalisalz der Peroxodischwefelsäure und
c mindestens einem Erdalkalihydroxid und/oder mindestens einem Erdalkalicarbonat sowie mit einer Gewichtsmenge Wasser, die unterhalb der Wassermenge liegt, die nicht zur Verflüssigung des Gemisches ausreicht oder die unter der Wassermenge liegt, die unter den jeweiligen Verfahrensbedingungen gerade noch zur Verflüssigung des Gemisches ausreichend ist, und/oder mit einer wasserhaltigen oder kristallwasserhaltigen Verbindung in fester Form unter Vermischung hergestellt.

Die Umsetzung erfolgt dabei unter Vermischung bei einer Temperatur zwischen 5 und 110 °C, wobei ein Umsetzungsgemisch gemisch erhalten wird, das mindestens ein Erdalkalisalz der Peroxomonoschwefelsäure (Erdalkalisalz der Sulfomonopersäure) und/oder mindestens ein Erdalkalisalz der Peroxodischwefelsäure (a) und mindestens ein Alkalisalz, ausgewählt aus der Gruppe der Alkalisalze der Peroxomonoschwefelsäure und/oder der Alkalisalze der Peroxodischwefelsäure, (b) und mindestens ein Erdalkalihydroxid und/oder mindestens ein Erdalkalioxid und/oder mindestens ein Erdalkalicarbonat (c) und gegebenenfalls Sulfat oder Hydrogensulfat, ausgewählt aus der Gruppe der Alkali- und/oder Erdalkalisulfate oder -hydrogensulfate, (d) enthält

Bevorzugt wird die Vermischung bei einer Temperatur von 20 bis 60 °C durchgeführt und das Mittel, das a, b und c und gegebenenfalls d enthält, wird auf einen pH-Wert von 4,5 bis 10, vorzugsweise 5 bis 9, eingestellt.

Das Wasser wird dabei in feinverteilter Form, vorzugsweise in Tropfen-, Tröpfchen-, Sprüh- oder Dampfform, und/oder durch mindestens eine kristallwasserhaltige oder wasserhaltige anorganisch-chemische Verbindung in einem Arbeitsgang oder kontinuierlich oder diskontinuierlich in gleichen oder unterschiedlich verteilten Zeiträumen während des Mischvorganges zugefügt und/oder die Umsetzung von b und c wird mit einer Gewichtsmenge Wasser, die größer, gleich oder kleiner ist, als sie zur Verflüssigung des Gemisches ausreicht, vermischt und die vorzugsweise flüssige Reaktionsmischung einer Sprühtrocknung unterworfen.

Das Verfahren zur Herstellung eines perborat- oder boratfreien Wasseraufbereitungs- und/oder Wasserdesinfektionsmittels auf der Basis mindestens eines Persulfates sowie gegebenenfalls eines Bindemittels und/oder Silikates erfolgt somit durch partielle bzw. über- oder unterstöchiometrische oder stöchiometrische Umsetzung aus b und c.

Die Vermischung erfolgt bei einer Temperatur von 5 bis 110 °C, vorzugsweise 20 bis 60 °C. Bei der Sprühtrocknung können durch kurzfristige Hitzeeinwirkung auch höhere Temperaturen verwendet werden.

Die vorliegende Erfindung betrifft weiterhin nach einer bevorzugten Ausführungsform ein Verfahren bei dem als Alkalisalz der Peroxomonoschwefelsäure oder Peroxodischwefelsäure (b), vorzugsweise ein Natrium- und/oder Kaliumsalz der Peroxomonoschwefelsäure und/oder der Peroxodischwefelsäure und/oder ein Alkalisalzgemisch oder ein Doppel- oder Tripelsalz derselben verwendet wird, von dem ein Bestandteil ein Alkalisalz der Peroxomonoschwefelsäure und/oder Peroxodischwefelsäure und dessen anderer Bestandteil ein anderes neutrales, saures oder schwach alkalisches Salz, vorzugsweise ein Alkalisulfat und/oder Alkalihydrogensulfat, ist.

Bei der Herstellung werden 100 Gew.-Teile der Bestandteile (a), (b) und (c) oder bezogen auf die Summe von (b) und (c) = 100 Gew.-Teile mit weniger als 25 Gew.-Teile Wasser, vorzugsweise weniger als 20 Gew.-Teile Wasser, und/oder mit mindestens einer kristallwaserhaltigen Verbindung (im Trockenmischverfahren) vermischt und umgesetzt. Die Gewichtsmenge des zugesetzten Wassers und/oder Kristallwassers, die vorzugsweise unter der Grenze der Verflüssigung der Mischung gehalten wird, hängt u. a. davon ab, in welcher Gewichtsmenge das entsprechende Erdalkalipersulfat gebildet werden soll, ob Erdalkalioxid oder -hydroxid oder -carbonat eingesetzt wird, welche Erdalkaliverbindung verwendet wird u. dgl. Besonders bevorzugt werden weniger als 10 Gew.-Teile Wasser zugesetzt.

Nach einer weiteren bevorzugten Ausführungsform werden hinsichtlich der Bestandteile oder Reaktionsprodukte (b) und (c) mehr als 50 Gew.-%, vorzugsweise mehr als 60 Gew.-%, bezogen auf die zur Umsetzung eingesetzten Kationen (100 Gew.-%) in Form von Kaliumverbindungen oder Kaliumionen und Calciumverbindungen oder Calciumionen eingesetzt und/oder als Peroxoschwefelsäuresalze Kalium- und/oder Natriumsalze der Peroxomonoschwefelsäure oder Mischungen dieser mit Alkalisalzen der Peroxodischwefelsäure zur Umsetzung verwendet und/oder Tripelsalze der Peroxomonoschwefelsäure. Wird zur Umsetzung ein Gemisch von Alkalisalzen der Peroxomonoschwefelsäure (b1) und Peroxodischwefelsäure (b2) verwendet, so wird vorzugsweise ein Gewichtsverhältnis von b1 zu b2 von 10 : 1 bis 1 : 10, bevorzugt 4 : 1 bis 1 : 4, eingehalten.

Das in fester Form, vorzugsweise als Granulat oder Salz, vorliegende Wasserbehandlungs- oder Wasserdesinfektionsmittel wird nach einer Ausführungsform mit 0,1 bis 15 Gew.-%, vorzugsweise 0,5 bis 8 Gew.-%, mindestens eines Bindemittels, vorzugsweise eines Alkalisilikates und/oder eines anderen anorgnaisch chemischen Bindemittels vermischt, damit überzogen, tablettiert, granuliert oder zu geformten Festkörpern verarbeitet.

Nach einer weiteren Ausführungsform werden dem erfindungsgemäßen Mittel geringe Gewichtsmengen einer hygroskopischen Substanz, vorzugsweise ausgewählt aus der Gruppe der gesättigten und/oder ungesättigten Carbonsäuren oder deren wasserlöslichen Salze mit einer C-Zahl über 3, vorzugsweise über 10, und/oder Polysiloxane, z. B. Polydimethylsiloxan und dgl. eingesetzt, bevorzugt werden Fettsäuren oder deren wasserlöslichen Salze oder Alkalisalze verwendet, insbesondere Stearinsäure und/oder Hydroxystearinsäure.

Nach einer weiteren Ausführungsform erfolgt der Einsatz des Mittels in Gegenwart von mindestens einem Zeolith und/oder bei der Verpressung zu Tabletten in Gegenwart eines Gleitmittels, z. B. Erdalkalistearates.

Generell gilt jedoch bei allen Zusatzmitteln, Bindemittel oder dgl., daß die eingesetzten Zusatzmittel sowohl gualitativ als auch quantitativ so bemessen sein müssen, daß sie das Wasser nicht oder nicht wesentlich belasten, da das Mittel auch ohne Verwendung dieser Zusatzmittel und/oder Bindemittel die wichtigsten der aufgezählten Vorteile erbringt.

Das erfindungsgemäße Mittel kann in einer einfach herzustellenden Formulierung angeboten werden bzw. hergestellt werden, so daß eine sichere Dosierung und Anwendung möglich ist. Das Mittel ist auch über einen gewissen Zeitraum lagerstabil und führt innerhalb dieses Zeitraumes nicht zu Stabilitäts- und zu Qualitätsproblemen. Das erfindungsgemäße Mittel ist infolge der guten Handhabbarkeit sowohl gewerblich als auch in Privathaushalten einfach und sicher anzuwenden. Gesundheitliche Schädigungen der Haut und Schleimhäute, wie sie bei direktem Kontakt mit konzentrierten Lösungen von Peroxoverbindungen vorkommen können, können innerhalb der Dosierung und Herstellung des Mittels vermieden werden. Das Mittel ermöglicht eine Anwendung in wäßrigen Medien ohne wesentliche Änderung des pH-Wertes, falls dies gewünscht wird oder bei Einstellung eines bestimmten pH-Wertes falls dies erforderlich ist. Aufgrund der genannten Vorteile ist das Mittel auch im Rahmen der Wasserbehandlung im Anwendungsbereich einsetzbar, schwerpunktmäßig jedoch zur Wasserdesinfektion. Das Mittel ermöglicht jedoch auch eine Bekämpfung von Bakterien, Algen und anderen unerwünschten Verunreinigungen des Wassers, was jedoch nicht schwerpunktmäßig angestrebt wird. Da das Mittel auch innerhalb eines pH-Bereiches von etwa 7, leicht sauer oder leicht alkalisch eingestellt werden kann, ergeben sich auch Einsatzgebiete, bei denen auf die pH-Wert-Einstellung besonders geachtet werden muß, so z. B. die Verwendung in Aquarienenwasser, Einsatz für Trinkwasser und dgl.

Die Erfindung betrifft weiterhin die Verwendung des Mittels zur Wasserbehandlung und Oxidation von Abwasser (oder Brauchwasser), vorzugsweise zur Behandlung von Abwasser oder Brauchwasser, das organisch-chemische durch Sauerstoff oxidierbare Verbindungen enthält, in einer Gewichtsmenge des festen Mittels von 0,5 bis 50 g/l Wasser, vorzugsweise 1 bis 15 g/l Wasser.

Nach einer anderen bevorzugten Ausführungsform wird das Mittel zur Trinkwasserbehandlung oder Trinkwasserdesinfektion in Gewichtsmengen von 1 bis 50 mg/l, vorzugsweise 10 bis 40 mg/l Trinkwasser verwendet (bezogen auf das feste Mittel).

Die vorliegende Erfindung betrifft auch die Verwendung des Mittels zur Schwimmwasserdesinfektion oder Schwimmwasserbehandlung in Gewichtsmengen vom 40 bis 500 mg/l, vorzugsweise 45 bis 200 mg/l Schwimmbadwasser, bezogen auf das feste Mittel.

Nach einer Anwendungsform wird das erfindungsgemäße Mittel in Form von gepreßten Tabletten, in Form von Festkörpern oder Granulaten für Ionenaustauscher verwendet.

Schließlich ist das Mittel in Gewichtsmengen von 10 bis 200 mg, vorzugsweise 20 bis 50 mg, auch für die Behandlung von Aquarienwasser verwendbar.

Nach einer weiteren bevorzugten Ausführungsform wird das Mittel zur Behandlung von Papierpulpe oder Zellstoff in wäßrigen Medien verwendet.

### Ausführungsbeispiele

1. 160 g ca(OH)₂ wurden mit 980 g des Tripelsalzes von Kaliumperoxomonosulfat 2 KHSO₅.KHSO₄.K₂SO₄ vermischt. Die Mischung wurde in einem birnenförmigen Mischer unter Rotierung durchgeführt, der sich mit einer Geschwindigkeit von 3 bis 4 Umdrehungen pro Minute drehte. Mit einem feinen Sprühkopf wurden 35 bis 45 ml destillierten Wassers sehr langsam oder diskontinuierlich oder in sehr kleiner Menge pro Minute versprüht, durch Beblasen mit 5o °C heißer Luft nachgetrocknet und weiter gemischt bzw. rotiert. Überraschenderweise besaß die Mischung die Form von gleichförmigen Körnchen, die bei einer Untersuchung mit dem Mikroskop sowie einer Analyse die Anwesenheit einer Hülle harten Calciumsalzes der Caroschen Säure und eines Kerns aus einem Gemisch von Calcium-Hydroxid und Tripelsalz aufzeigten. Das so erhaltene Granulat konnte einfach in Tablettenform gepreßt werden. Es wurden Tabletten mit Gewichten von 1 bis ca. 200 g geformt, wobei vorzugsweise Talkum oder ein anderes Silikat mit Bindemitteleigenschaften benutzt wurde.
   Eine chemische Analyse zeigte einen Gehalt von 4,2 aktiven Sauerstoffs auf, der dem aktiven Sauerstoffgehalt als Tripelsalz entsprach. Die Zeit, in der sich eine Tablette von 200 g auflöste, reicht bis zu ca. 24 h und kann noch länger sein, wenn der Druck zur Herstellung einer Tablette erhöht wird. Die Tabletten erwiesen sich als sehr stabil, selbst nach 4 monatelanger Lagerung.
2. 100 g CaCO₃ wurden mit 400 g Tripelsalz von Kaliumperoxomonosulfat 2 KHSO₅.KHSO₄.K₂SO₄ vermischt. Die Mischung wurde in einem birnenförmigen Mischer unter Rotierung durchgeführt. Mit einem feinen Sprühkopf wurden 50 ml Wasser sehr langsam oder diskontinuierlich oder in sehr kleiner Menge versprüht, nachgetrocknet und weiter gemischt bzw. rotiert. Übertaschenderweise besaß auch diese Mischung die Form von gleichförmigen Körnchen, die bei einer Untersuchung mit dem Mikroskop sowie einer Analyse die Anwesenheit einer Hülle harten Calciumsalzes der Caroschen Säure und eines Kerns aus einem Gemisch von Calcium-Hydroxid und Kaliumperoxomonosulfat aufzeigten. Das so erhaltene Granulat konnte einfach in Tablettenform gepreßt werden. Es wurden Tabletten mit Gewichten von 1 bis ca. 200 g geformt, wobei vorzugsweise Alkalisilikat mit verwendet wurde.
3. 160 g Ca(OH)₂ wurden mit 980 g des Tripelsalzes von Kaliumperoxomonosulfat 2 KHSO₅.KHSO₄.K₂SO₄ vermischt. Die Mischung wurde in einem birnenförmigen Mischer unter Rotierung durchgeführt. Nachfolgend wurden 50 g Calciumperoxid zugegeben. Mit einem feinen Sprühkopf wurden 35 bis 45 ml Wasser sehr langsam versprüht. Die Weiterverarbeitung erfolgte wie im Beispiel 1.
4. 140 g Tripelsalz von Kaliumperoxomonosulfat 2 KHSO₅ x KHSO₄ x K₂SO₄ wurden mit 16 g CaCO₃ vermischt, mit 1 ml Wasser besprüht und in einer Tablettenpresse unter Mitverwendung von 0,5 g Stearat, vorzugsweise Magnesiumstearat, verpreßt.
   Während eine aus dem reinen Tripelsalz gespreßte Tablette sich sofort in Wasser zersetzt und zerfiel, begann die erfindungsgemäße 15 g Tablette in Wasser erst nach 45 Minuten zu bröckeln, obgleich gegenüber der Gewichtsmenge Tripelsalz nur eine geringe Gewichtsmenge an stabilisierendem Calciumperoxomonosulfat durch Umsetzung gebildet war.
   Die erfindungsgemäße Tablette wurde zusätzlich 6 Monate gelagert, ohne daß eine Veränderung auftrat.
5. 8.000 g Tripelsalz von Kaliumperoxomonosulfat 2 KHSO₅ x KHSO₄ x K₂SO₄ und 160 g Na₂SO₄ x 10H₂O sowie 2 g CaCO₃ wurden (ohne Zugabe von Wasser) trocken miteinander vermischt und zu Tabletten von je 18,5 g ohne Zugabe sonstiger Hilfsmittel verpreßt. Trotz der geringen Zugabe von CaCo₃ konnte beobachtet werden, daß bei Zugabe der Tablette zu 900 ml Wasser die Tablette erst nach 45 Minuten zu ca. 65 % zerfallen war, obgleich nach ca. 4 Minuten (berechnet nach Zugabe zum Wasser) eine geringe Gasentwicklung begonnen hatte.
   Die Tablette ist sehr gut lagerfähig und insbesondere in solchem Wasser einsetzbar, bei dem möglichst kein oder nur sehr geringe Rückstände bei der Verwendung der Tablette auftreten sollen.
6. 100 g Ca(OH)₂ und 60 g CaCO₃ wurden mit 780 g Kaliumperoxomonosulfat und 10 g Na₂SO₄ x 10H₂O vermischt. Die Mischung wurde in einem birnenförmigen Mischer unter Rotierung durchgeführt. Mit einem feinen Sprühkopf wurden 30 ml Wasser sehr langsam versprüht. Die Weiterverarbeitung erfolgte wie im Beispiel 1.
7. 6.000 g Tripelsalz von Kaliumperoxomonosulfat 2 KHSO₅ x KHSO₄ x K₂SO₄, 2.000 g Natriumperoxodisulfat und 160 g Na₂SO₄ x 10H₂O sowie 4 g CaCO₃ wurden unter Zugabe von 0,5 ml Wasser miteinander vermischt und zu Tabletten von je 18,5 g ohne Zugabe sonstiger Hilfsmittel verpreßt.
8. 70 g Kaliumperoxomonosulfat und 70 g Natriumperoxodisulfat werden mit 1 g Na₂SO₄ x 10H₂O und 1 g Na₂CO₃ x 10H₂O sowie mit 10 g CaCO₃ vermischt, mit 0,5 ml Wasser besprüht und in einer Tablettenpresse unter Mitverwendung von 0,5 g Stearat verpreßt. Die Tablette war gut lagerfähig.
   Die erfindungsgemäße Tablette wurde zusätzlich 6 Monate gelagert, ohne daß eine Veränderung auftrat.

## Patentansprüche

1. Perborat- oder boratfreies Wasseraufbereitungs- und/oder Wasserdesinfektionsmittel auf der Basis mindestens eines Persulfates sowie gegebenenfalls eines Bindemittels und/oder Silikates, dadurch gekennzeichnet, daß das Wasseraufbereitungs- und/oder Wasserdesinfektionsmittel in fester Form vorliegt und mindestens ein Erdalkalisalz der Peroxomonoschwefelsäure (Erdalkalisalz der Sulfomonopersäure) und/oder mindestens ein Erdalkalisalz der Peroxodischwefelsäure (a) und mindestens ein Alkalisalz, ausgewählt aus der Gruppe der Alkalisalze der Peroxomonoschwefelsäure und/oder der Alkalisalze der Peroxodischwefelsäure, (b) und mindestens ein Erdalkalihydroxid und/oder mindestens ein Erdalkalioxid und/oder mindestens ein Erdalkalicarbonat (c) und gegebenenfalls Sulfat oder Hydrogensulfat, ausgewählt aus der Gruppe der Alkali- und/oder Erdalkalisulfate oder -hydrogensulfate (d), enthält.

2. Wasseraufbereitungs- und/oder Wasserdesinfektionsmittel nach Anspruch 1, dadurch gekennzeichnet, daß das Wasseraufbereitungs- und/oder Wasserdesinfektionsmittel a, b, c und d enthält.

3. Wasseraufbereitungs- und/oder Wasserdesinfektionsmittel nach Ansprüchen 1 und 2, dadurch gekennzeichnet, daß als Alkalisalz der Peroxomonoschwefelsäure oder Peroxodischwefelsäure ein Natrium-, Kalium- und/oder Ammoniumsalz der Peroxomonoschwefelsäure und/oder der Peroxodischwefelsäure und/oder ein Alkalisalzgemisch oder ein Doppel- oder Tripelsalz derselben eingesetzt wird bzw. im Gemisch enthalten ist, von dem ein Bestandteil ein Alkalisalz der Peroxomonoschwefelsäure und/oder Peroxodischwefelsäure und dessen anderer Bestandteil ein anderes neutrales, saures oder schwach alkalisches Salz, vorzugsweise ein Alkalisulfat und/oder Alkalihydrogensulfat, ist.

4. Wasseraufbereitungs- und/oder Wasserdesinfektionsmittel nach einem oder mehreren der Ansprüche 1 bis 3, dadurch gekennzeichnet, daß das Mittel einen pH-Wert von 4,5 bis 10, vorzugsweise 5 bis 9, aufweist und/oder als Erdalkaliverbindung Calcium- und/oder Magnesiumverbindungen enthält.

5. Wasseraufbereitungs- und/oder Wasserdesinfektionsmittel nach einem oder mehreren der Ansprüche 1 bis 4, dadurch gekennzeichnet, daß der Wassergehalt des Mittels 0,05 bis 6 Gew.-% (bezogen auf die Gesamtfertigmischung), vorzugsweise 0,1 bis 4,5 Gew.-%, beträgt.

6. Wasseraufbereitungs- und/oder Wasserdesinfektionsmittel nach einem oder mehreren der Ansprüche 1 bis 5, dadurch gekennzeichnet, daß das Mittel zusätzlich ein Ferrat, ausgewählt aus der Gruppe der Alkali- und/oder Erdalkaliferrate, enthält, und einen pH-Wert von 7 bis 10, vorzugsweise 7,5 bis 9, aufweist, und vorzugsweise das Gewichtsverhältnis von Erdalkalisalz der Peroxomonoschwefelsäure und/oder Erdalkalisalz der Peroxodischwefelsäure zu dem Ferrat
5 : 1 bis 1 : 5, vorzugsweise
1 : 0,6 bis 1 : 0,005,
beträgt.

7. Wasseraufbereitungs- und/oder Wasserdesinfektionsmittel nach einem oder mehreren der Ansprüche 1 bis 6, dadurch gekennzeichnet, daß das Mittel zusätzlich mindestens eine kristallwasserhaltige und/oder wasserhaltige chemische Verbindung (vor dem Zusatz wasser- und/oder kristallwasserhaltige Verbindung), vorzugsweise eine anorganisch-chemische kristallwasserhaltige Verbindung, enthält.

8. Wasseraufbereitungs- und/oder Wasserdesinfektionsmittel nach einem oder mehreren der Ansprüche 1 bis 7, dadurch gekennzeichnet, daß das dem Mittel zugesetzte Wasser ganz oder teilweise durch eine kristallwasserhaltige oder wasserhaltige anorganischchemische Verbindung ersetzt ist und/oder daß das Mittel zusätzlich eine hygroskopische Verbindung enthält.

9. Verfahren zur Herstellung eines perborat- oder boratfreien Wasseraufbereitungs- und/oder Wasserdesinfektionsmittels auf der Basis mindestens eines Persulfates sowie gegebenenfalls eines Bindemittels und/oder Silikates, dadurch gekennzeichnet, daß das Wasseraufbereitungs- oder Wasserdesinfektionsmittel durch partielle oder stöchiometrische Umsetzung aus
b mindestens einem Alkalisalz der Peroxomonoschwefelsäure (Alkalisalz der Sulfomonopersäure) und/oder mindestens einem Alkalisalz der Peroxodischwefelsäure und
c mindestens einem Erdalkalihydroxid und/oder Erdalkalioxid und/oder Erdalkaliperoxid und/oder Erdalkalicarbonat sowie mit einer Gewichtsmenge Wasser, die nicht zur Verflüssigung des Gemisches ausreicht oder die unterhalb der Wassermenge liegt, die unter den jeweiligen Verfahrensbedingungen gerade noch zur Verflüssigung des Gemisches ausreichend ist, in fester Form unter Vermischung hergestellt wird,
daß die Umsetzung durch Vermischen bei einer Temperatur zwischen 5 und 110 °C erfolgt, wobei ein Umsetzungsgemisch erhalten wird, das mindestens ein Erdalkalisalz der Peroxomonoschwefelsäure (Erdalkalisalz der Sulfomonopersäure) und/oder mindestens ein Erdalkalisalz der Peroxodischwefelsäure (a) und mindestens ein Alkalisalz, ausgewählt aus der Gruppe der Alkalisalze der Peroxomonoschwefelsäure und/oder der Alkalisalze der Peroxodischwefelsäure, (b) und mindestens ein Erdalkalihydroxid und/oder mindestens ein Erdalkalioxid und/oder mindestens ein Erdalkalicarbonat (c) und gegebenenfalls Sulfat oder Hydrogensulfat, ausgewählt aus der Gruppe der Alkali- und/oder Erdalkalisulfate oder -hydrogensulfate, (d) enthält

10. Verfahren nach Anspruch 9, dadurch gekennzeichnet, daß die Vermischung bei einer Temperatur von
20 bis 60 °C
erfolgt und das Mittel, das a, b und c und/oder d enthält, auf einen pH-Wert von 4,5 bis 10, vorzugsweise 5 bis 9, eingestellt wird.

11. Verfahren nach Ansprüchen 9 und 10, dadurch gekennzeichnet, daß das Wasser in feinverteilter Form, vorzugsweise in Tropfen-, Tröpfchen-, Sprüh- oder Dampfform, und/oder mindestens eine kristallwasserhaltige oder wasserhaltige anorganisch-chemische Verbindung in einem Arbeitsgang entweder kontinuierlich oder diskontinuierlich in gleichen oder unterschiedlich verteilten Zeiträumen während des Mischvorganges zugefügt wird und/oder daß die Umsetzung von b und c mit einer Gewichtsmenge Wasser, die zur Verflüssigung des Gemisches ausreicht, vermischt und die flüssige Reaktionsmischung einer Sprühtrocknung unterworfen wird.

12. Verfahren nach einem oder mehreren der Ansprüche 9 bis 11, dadurch gekennzeichnet, daß als Alkalisalz der Peroxomonoschwefelsäure oder Peroxodischwefelsäure (b) ein Natrium-, Kalium- und/oder Ammoniumsalz der Peroxomonoschwefelsäure und/oder der Peroxodischwefelsäure und/oder ein Alkalisalzgemisch oder ein Doppel- oder Tripelsalz derselben verwendet wird, von dem ein Bestandteil ein Alkalisalz der Peroxomonoschwefelsäure und/oder Peroxodischwefelsäure und dessen anderer Bestandteil ein anderes neutrales, saures oder schwach alkalisches Salz, vorzugsweise ein Alkalisulfat und/oder Alkalihydrogensulfat, ist.

13. Verfahren nach einem oder mehreren der Ansprüche 9 bis 12, dadurch gekennzeichnet, daß b zu mehr als 50 Gew.-%, vorzugsweise zu mehr als 60 Gew.-%, bezogen auf die zur Umsetzung eingesetzten Kationen (100 Gew.-%), in Form von Kaliumverbindungen oder Kaliumionen und Calciumverbindungen oder Calciumionen und/oder daß als Peroxoschwefelsäuresalze Kalium- und/oder Natriumsalze der Peroxomonoschwefelsäure oder Mischungen dieser mit Alkalisalzen der Peroxodischwefelsäure zur Umsetzung verwendet werden und/oder daß zur Umsetzung Tripelsalze der Peroxomonoschwefelsäure eingesetzt werden.

14. Verfahren nach einem oder mehreren der Ansprüche 9 bis 13, dadurch gekennzeichnet, daß das Wasserbehandlungs- oder Wasserdesinfektionsmittel mit 0,1 bis 15 Gew.-%, vorzugsweise 0,5 bis 8 Gew.-%, mindestens eines Bindemittels, vorzugsweise eines Alkalisilikates, und/oder mit mindestens einem hygroskopischen Mittel vermischt, damit überzogen, tablettiert oder zu geformten Festkörpern verarbeitet wird.

15. Verfahren nach einem oder mehreren der Ansprüche 9 bis 14, dadurch gekennzeichnet, daß die Bestandteile b und c oder a, b und c (gleich 100 Gewichtsteile) mit weniger als 25 Gewichtsteilen, vorzugsweise mit weniger als 20 Gewichtsteilen, Wasser und/oder mit mindestens einer kristallwasserhaltigen Verbindung im Trockenmischverfahren vermischt und umgesetzt werden.

16. Verfahren nach einem oder mehreren der Ansprüche 9 bis 15, dadurch gekennzeichnet, daß die Bestandteile b und c, oder a, b und c (gleich 100 Gewichtsteile) mit mehr als 60 Gewichtsteilen, vorzugsweise mehr als 100 Gewichtsteilen, Wasser vermischt und sprühgetrocknet werden.

17. Verwendung des Mittels nach einem oder mehreren der Ansprüche 1 bis 8 oder hergestellt nach einem oder mehreren der Ansprüche 9 bis 16 zur Wasserbehandlung und Oxidation von Abwasser (oder Brauchwasser), vorzugsweise zur Behandlung von Abwasser oder Brauchwasser, das organisch-chemische durch Sauerstoff oxidierbare Verbindungen enthält, in einer Gewichtsmenge des festen Mittels von 0,5 bis 50 g/l Wasser, vorzugsweise 1 bis 15 g/l Wasser.

18. Verwendung des Mittels nach einem oder mehreren der Ansprüche 1 bis 8 oder hergestellt nach einem oder mehreren der Ansprüche 9 bis 16 zur Trinkwasserbehandlung oder Trinkwasserdesinfektion in Gewichtsmengen von 1 bis 50 mg/l, vorzugsweise 10 bis 40 mg/l, Trinkwasser.

19. Verwendung des Mittels nach einem oder mehreren der Ansprüche 1 bis 8 oder hergestellt nach einem oder mehreren der Ansprüche 9 bis 16 zur Schwimmwasserdesinfektion oder Schwimmwasserbehandlung in Gewichtsmengen von 40 bis 500 mg/l, vorzugsweise 45 bis 200 mg/l, Schwimmbadwasser.

20. Verwendung des Mittels nach einem oder mehreren der Ansprüche 1 bis 8 in Form von gepreßten Tabletten, in Form von Festkörpern oder Granulaten zur Desinfektion von Ionenaustauschern.

21. Verwendung des Mittels nach einem oder mehreren der Ansprüche 1 bis 8 in Gewichtsmengen von 10 bis 200 mg/l, vorzugsweise 20 bis 50 mg/l, für die Behandlung von Aquarienwasser.

22. Verwendung des Mittels nach einem oder mehreren der Ansprüche 1 bis 8 zur Behandlung von Papierpulpe oder Zellstoff in wäßrigen Medien.

## Claims

1. Perborate-free or borate-free water treatment and/or water disinfection agent on the basis of at least one persulphate and also optionally a binder and/or silicate, characterised in that the water treatment and/or water disinfection agent is present in solid form and contains at least one alkaline earth salt of peroxomonosulphuric acid (alkaline earth salt of sulpho-monoperacid) and/or at least one alkaline earth salt of peroxodisulphuric acid (a) and at least one alkaline salt, selected from the group consisting of the alkali salts of peroxomonosulphuric acid and/or the alkali salts of peroxodisulphuric acid (b), and at least one alkaline earth hydroxide and/or at least one alkaline earth oxide and/or at least one alkaline earth carbonate (c) and optionally sulphate or hydrogen sulphate, selected from the group consisting of alkaline and/or alkaline earth sulphates or hydrogen sulphates (d).

2. Water treatment and/or water disinfection agent according to Claim 1, characterised in that the water treatment and/or water disinfection agent contains a, b, c and d.

3. Water treatment and/or water disinfection agent according to Claims 1 and 2, characterised in that a sodium, potassium and/or ammonium salt of peroxomonosulphuric acid and/or of peroxodisulphuric acid and/or an alkali salt mixture or a double or triple salt thereof is used or is contained in the mixture as alkali salt of peroxomonosulphuric acid or peroxodisulphuric acid, one constituent of which mixture is an alkali salt of peroxomonosulphuric acid and/or peroxodisulphuric acid and the other constituent of which is a different neutral, acidic or slightly alkaline salt, preferably an alkali sulphate and/or alkali hydrogen sulphate.

4. Water treatment and/or water disinfection agent according to one or more of Claims 1 to 3, characterised in that the agent has a pH value of 4.5 to 10, preferably 5 to 9, and/or contains calcium and/or magnesium compounds as alkaline earth compound.

5. Water treatment and/or water disinfection agent according to one or more of Claims 1 to 4, characterised in that the water content of the agent is 0.05 to 6% by weight (relative to the total finished mixture), preferably 0.1 to 4.5% by weight.

6. Water treatment and/or water disinfection agent according to one or more of Claims 1 to 5, characterised in that the agent additionally contains a ferrate, selected from the group of alkali and/or alkaline earth ferrates, and has a pH value of 7 to 10, preferably 7.5 to 9, and preferably the weight ratio of alkaline earth salt of peroxomonosulphuric acid and/or alkaline earth salt of peroxodisulphuric acid to the ferrate is
5 : 1 to 1 : 5, preferably
1 : 0.6 to 1 : 0.005.

7. Water treatment and/or water disinfection agent according to one or more of Claims 1 to 6, characterised in that the agent additionally contains at least one chemical compound containing water of crystallisation and/or water (compound containing water and/or water of crystallisation before the addition), preferably an inorganic-chemical compound containing water of crystallisation.

8. Water treatment and/or water disinfection agent according to one or more of Claims 1 to 7, characterised in that the water added to the agent is replaced entirely or in part by an inorganic-chemical compound containing water of crystallisation or water and/or that the agent additionally contains a hygroscopic compound.

9. A method for preparing a perborate-free or borate-free water treatment and/or water disinfection agent on the basis of at least one persulphate and also optionally a binder and/or silicate, characterised in that the water treatment or water disinfection agent is prepared in solid form with mixing by partial or stoichiometric reaction from
b at least one alkali salt of peroxomonosulphuric acid (alkali salt of sulpho-monoperacid) and/or at least one alkali salt of peroxodisulphuric acid and
c at least one alkaline earth hydroxide and/or alkaline earth oxide and/or alkaline earth peroxide and/or alkaline earth carbonate and with a quantity by weight of water which is not sufficient to liquefy the mixture or which is less than the quantity of water which is just sufficient under the process conditions in question for liquefaction of the mixture,
that the reaction is effected by mixing at a temperature between 5 and 110°C, with a reaction mixture being obtained which contains at least one alkaline earth salt of peroxomonosulphuric acid (alkaline earth salt of sulpho-monoperacid) and/or at least one alkaline earth salt of peroxodisulphuric acid (a) and at least one alkali salt, selected from the group consisting of the alkali salts of peroxomonosulphuric acid and/or the alkali salts of peroxodisulphuric acid (b), and at least one alkaline earth hydroxide and/or at least one alkaline earth oxide and/or at least one alkaline earth carbonate (c) and optionally sulphate or hydrogen sulphate, selected from the group consisting of alkali and/or alkaline earth sulphates or hydrogen sulphates (d).

10. A method according to Claim 9, characterised in that the mixing is effected at a temperature of
20 to 60°C
and the agent which contains a, b and c and/or d is set to a pH value of 4.5 to 10, preferably 5 to 9.

11. A method according to Claims 9 and 10, characterised in that the water in finely divided form, preferably in drop, droplet, spray or vapour form, and/or at least one inorganic-chemical compound containing water of crystallisation or water, is added in one operation either continuously or discontinuously in the same or differently distributed periods during the mixing operation and/or that the reaction of b and c is effected with a quantity by weight of water which is sufficient for liquefaction of the mixture and the liquid reaction mixture is subjected to spray drying.

12. A method according to one or more of Claims 9 to 11, characterised in that a sodium, potassium and/or ammonium salt of peroxomonosulphuric acid and/or of peroxodisulphuric acid and/or an alkali salt mixture or a double or triple salt thereof, one constituent of which mixture is an alkaline salt of peroxomonosulphuric acid and/or peroxodisulphuric acid and the other constituent of which is a different neutral, acidic or slightly alkaline salt, preferably an alkali sulphate and/or alkali hydrogen sulphate, is used or is contained in the mixture as alkali salt of peroxomonosulphuric acid or peroxodisulphuric acid (b).

13. A method according to one or more of Claims 9 to 12, characterised in that more than 50% by weight, preferably more than 60% by weight, relative to the cations used for reaction (100% by weight), of b is used in the form of potassium compounds or potassium ions and calcium compounds or calcium ions and/or that potassium and/or sodium salts of peroxomonosulphuric acid or mixtures thereof with alkali salts of peroxodisulphuric acid are used as peroxosulphuric acid salts for reaction and/or that triple salts of peroxomonosulphuric acid are used for the reaction.

14. A method according to one or more of Claims 9 to 13, characterised in that the water treatment or water disinfection agent is mixed, coated, formed into tablets or processed into shaped solid bodies with 0.1 to 15% by weight, preferably 0.5 to 8% by weight, of at least one binder, preferably an alkali silicate, and/or with at least one hygroscopic agent.

15. A method according to one or more of Claims 9 to 14, characterised in that the constituents b and c or a, b and c (equal to 100 parts by weight) are mixed and reacted in a dry mixing process with less than 25 parts by weight, preferably with less than 20 parts by weight, water and/or with at least one compound containing water of crystallisation.

16. A method according to one or more of Claims 9 to 15, characterised in that the constituents b and c, or a, b and c (equal to 100 parts by weight) are mixed with more than 60 parts by weight, preferably more than 100 parts by weight, water and are spray-dried.

17. The use of the agent according to one or more of Claims 1 to 8 or prepared according to one or more of Claims 9 to 16 for the water treatment and oxidation of waste water (or industrial water), preferably for the treatment of waste water or industrial water which contains organic-chemical compounds oxidisible by oxygen, in a quantity by weight of the solid agent of 0.5 to 50 g/l water, preferably 1 to 15 g/l water.

18. The use of the agent according to one or more of Claims 1 to 8 or prepared according to one or more of Claims 9 to 16 for the treatment of drinking water or disinfection of drinking water in quantities by weight of 1 to 50 mg/l, preferably 10 to 40 mg/l, drinking water.

19. The use of the agent according to one or more of Claims 1 to 8 or prepared according to one or more of Claims 9 to 16 for the disinfection of swimming-bath water or the treatment of swimming-bath water in quantities by weight of 40 to 500 mg/l, preferably 45 to 200 mg/l, swimming-bath water.

20. The use of the agent according to one or more of Claims 1 to 8 in the form of pressed tablets, in the form of solid bodies or granules for the disinfection of ion-exchangers.

21. The use of the agent according to one or more of Claims 1 to 8 in quantities by weight of 10 to 200 mg/l, preferably 20 to 50 mg/l, for the treatment of aquarium water.

22. The use of the agent according to one or more of Claims 1 to 8 for the treatment of paper pulps or chemical pulp in aqueous media.

## Revendications

1. Agent de traitement et/ou de désinfection de l'eau, exempt de perborate ou de borate, à base d'au moins un persulfate et éventuellement d'un liant et/ou d'un silicate, caractérisé en ce que l'agent de traitement et/ou de désinfection de l'eau se présente sous forme solide et contient au moins un sel d'un métal alcalino-terreux de l'acide peroxomonosulfurique (sel d'un métal alcalino-terreux de l'acide monopersulfurique) et/ou au moins un sel d'un métal alcalino-terreux de l'acide peroxodisulfurique (a), et au moins un sel d'un métal alcalin, choisi parmi l'ensemble comprenant les sels de métaux alcalins de l'acide peroxomonosulfurique et/ou les sels de métaux alcalins de l'acide peroxodisulfurique (b), et au moins un hydroxyde d'un métal alcalino-terreux et/ou au moins un oxyde d'un métal alcalino-terreux et/ou au moins un carbonate d'un métal alcalino-terreux (c), et éventuellement un sulfate ou un hydrogénosulfate choisis parmi l'ensemble comprenant les sulfates ou hydrogénosulfates de métaux alcalins et/ou alcalino-terreux (d).

2. Agent de traitement et/ou de désinfection de l'eau selon la revendication 1, caractérisé en ce que l'agent de traitement et/ou de désinfection de l'eau contient a, b, c, et d.

3. Agent de traitement et/ou de désinfection de l'eau selon les revendications 1 et 2, caractérisé en ce qu'on utilise comme sel d'un métal alcalin de l'acide peroxomonosulfurique ou de l'acide peroxodisulfurique un sel de sodium, de potassium et/ou d'ammonium de l'acide peroxomonosulfurique et/ou de l'acide peroxodisulfurique et/ou un mélange de sels de métaux alcalins, ou un sel double ou triple de ces derniers, ou encore ces sels sont contenus dans un mélange dont un constituant est un sel d'un métal alcalin de l'acide peroxomonosulfurique et/ou de l'acide peroxodisulfurique et dont l'autre constituant est un autre sel neutre, acide ou faiblement alcalin, de préférence un sulfate d'un métal alcalin et/ou un hydrogénosulfate d'un métal alcalin.

4. Agent de traitement et/ou de désinfection de l'eau selon l'une ou plusieurs des revendications 1 à 3, caractérisé en ce que l'agent présente un pH de 4,5 à 10 et de préférence de 5 à 9, et/ou contient, comme composé d'un métal alcalino-terreux, des composés du calcium et/ ou du magnésium.

5. Agent de traitement et/ou de désinfection de l'eau selon l'une ou plusieurs des revendications 1 à 4, caractérisé en ce que la teneur en eau de l'agent est de 0,05 % à 6 % en poids (par rapport au mélange fini total), de préférence de 0,1 % à 4,5 % en poids.

6. Agent de traitement et/ou de désinfection de l'eau selon l'une ou plusieurs des revendications 1 à 5, caractérisé en ce que l'agent contient en outre un ferrate, choisi parmi l'ensemble comprenant les ferrates de métaux alcalins et/ou alcalino-terreux, et présente un pH de 7 à 10, de préférence de 7,5 à 9, le rapport pondéral du sel d'un métal alcalino-terreux de l'acide peroxomonosulfurique et/ou du sel d'un métal alcalino-terreux de l'acide peroxodisulfurique au ferrate étant de préférence de 5:1 à 1:5 et de préférence de 1:0,6 à 1:0,005.

7. Agent de traitement et/ou de désinfection de l'eau selon l'une ou plusieurs des revendications 1 à 6, caractérisé en ce que l'agent contient en outre au moins un composé chimique contenant de l'eau de cristallisation et/ou contenant de l'eau (avant addition du composé contenant de l'eau et/ou de l'eau de cristallisation), de préférence un composé de chimie minérale contenant de l'eau de cristallisation.

8. Agent de traitement et/ou de désinfection de l'eau selon l'une ou plusieurs des revendications 1 à 7, caractérisé en ce que l'eau ajoutée au mélange est, en totalité ou en partie, remplacée par un composé de chimie minérale contenant de l'eau ou de l'eau de cristallisation, et/ou en ce que l'agent contient en outre un composé hygroscopique.

9. Procédé de préparation d'un agent de traitement et/ou de désinfection de l'eau, exempt de perborate ou de borate, à base d'au moins un persulfate, et éventuellement d'un liant et/ou d'un silicate, caractérisé en ce que l'agent de traitement ou de désinfection de l'eau est préparé par une réaction partielle ou stoechiométrique, à partir
b. d'au moins un sel d'un métal alcalin de l'acide peroxomonosulfurique (sel d'un métal alcalin de l'acide monopersulfurique) et/ou d'au moins un sel d'un métal alcalin de l'acide peroxodisulfurique, et
c. d'au moins un hydroxyde d'un métal alcalino-terreux et/ou d'un oxyde d'un métal alcalino-terreux et/ou d'un peroxyde d'un métal alcalino-terreux et/ou d'un carbonate d'un métal alcalino-terreux, avec une quantité pondérale d'eau qui ne suffit pas à la liquéfaction du mélange ou qui est inférieure à la quantité d'eau qui est tout juste suffisante, dans les conditions du procédé, pour liquéfier le mélange, et ce, sous forme solide avec opération de mélange,
en ce que la réaction s'effectue par mélange à une température comprise entre 5°C et 110°C, conduisant ainsi à un mélange réactionnel qui contient au moins un sel d'un métal alcalino-terreux de l'acide peroxomonosulfurique (sel d'un métal alcalino-terreux de l'acide monopersulfurique) et/ou au moins un sel d'un métal alcalin de l'acide peroxodisulfurique (a) et au moins un sel d'un métal alcalin, choisi parmi l'ensemble comprenant les sels de métaux alcalins de l'acide peroxomonosulfurique et/ou les sels de métaux alcalins de l'acide peroxodisulfurique (b), et au moins un hydroxyde d'un métal alcalino-terreux et/ou au moins un oxyde d'un métal alcalino-tetreux et/ou au moins un carbonate d'un métal alcalino-terreux (c), et éventuellement un sulfate ou un hydrogénosulfate choisis parmi l'ensemble comprenant les sulfates ou hydrogénosulfates de métaux alcalins et/ou alcalino-terreux (d).

10. Procédé selon la revendication 9, caractérisé en ce que l'opération de mélange est réalisée à une température de 20°C à 60°C, et que l'agent, qui contient a, b, c et/ou d, est ajusté à un pH de 4,5 à 10, de préférence de 5 à 9.

11. Procédé selon les revendications 9 et 10, caractérisé en ce que l'eau, sous forme finement divisée, de préférence sous forme de gouttes, de gouttelettes, d'une pulvérisation ou de vapeur, et/ou d'au moins un composé de chimie minérale, contenant de l'eau de cristallisation ou contenant de l'eau, est ajoutée, en une étape, d'une manière continue ou discontinue, aux même périodes, ou à des périodes variables au cours du temps, et ce pendant l'opération de mélange, et/ou en ce que la réaction de b et de c consiste à mélanger à une quantité pondérale d'eau suffisante pour liquéfier le mélange, le mélange réactionnel liquide étant soumis à un séchage par atomisation.

12. Procédé selon l'une ou plusieurs des revendications 9 à 11, caractérisé en ce qu'on utilise comme sel d'un métal alcalin de l'acide peroxomonosulfurique ou de l'acide peroxodisulfurique (b) un sel de sodium, de potassium et/ou d'ammonium de l'acide peroxomonosulfurique et/ou de l'acide peroxodisulfurique et/ou un mélange de sels de métaux alcalins ou encore un sel double ou un sel triple de ces derniers, dont un constituant est un sel d'un métal alcalin de l'acide peroxomonosulfurique et/ou de l'acide peroxodisulfurique et dont l'autre constituant est un autre sel neutre, acide ou faiblement alcalin, de préférence un sulfate d'un métal alcalin et/ ou un hydrogénosulfate d'un métal alcalin.

13. Procédé selon l'une ou plusieurs des revendications 9 à 12, caractérisé en ce qu'on utilise pour la réaction le composé b en une quantité supérieure à 50 % en poids, de préférence supérieure à 60 % en poids par rapport aux cations utilisés pour la réaction (100 % en poids), sous forme de composés du potassium ou d'ions potassium et de composés du calcium ou d'ions calcium, et/ou en ce que l'on utilise pour la réaction, comme sels d'acides peroxosulfuriques, les sels de potassium et/ou de sodium de l'acide peroxomonosulfurique ou des mélanges de ces derniers avec des sels de métaux alcalins de l'acide peroxodisulfurique, et/ou en ce que l'on utilise pour la réaction des sels triples de l'acide peroxomonosulfurique.

14. Procédé selon l'une ou plusieurs des revendications 9 à 13, caractérisé en ce que l'agent de traitement ou de désinfection de l'eau est mélangé à une quantité de 0,1 % à 15 % en poids et de préférence de 0,5 % à 8 % en poids d'au moins un liant, de préférence un silicate d'un métal alcalin, et/ou à au moins un agent hygroscopique, puis en est recouvert, transformé en comprimé ou mis en oeuvre pour donner des objets solides moulés.

15. Procédé selon l'une ou plusieurs des revendications 9 à 14, caractérisé en ce que les constituants b et c ou a, b et c (dont la somme correspond à 100 parties en poids) sont mélangés et mis à réagir avec moins de 25 parties en poids, de préférence moins de 20 parties en poids d'eau et/ou avec au moins un composé contenant de l'eau de cristallisation dans le cadre d'un procédé de mélange à sec.

16. Procédé selon l'une ou plusieurs des revendications 9 à 15, caractérisé en ce que les constituants b et c, ou a, b et c (dont la somme correspond à 100 parties en poids), sont mélangés à plus de 60 parties en poids et de préférence à plus de 100 parties en poids d'eau, et sont séchés par atomisation.

17. Utilisation de l'agent selon l'une ou plusieurs des revendications 1 à 8 ou préparé selon l'une ou plusieurs des revendications 9 à 16 pour le traitement de l'eau et l'oxydation des eaux usées (ou des eaux résiduaires), de préférence pour le traitement des eaux usées ou des eaux résiduaires contenant des composés pouvant subir une oxydation en chimie organique sous l'effet de l'oxygène, en une quantité pondérale de l'agent solide de 0,5 g/l à 50 g/l d'eau et de préférence de 1 g/l à 15 g/l d'eau.

18. Utilisation de l'agent selon l'une ou plusieurs des revendications 1 à 8 ou préparé selon l'une ou plusieurs des revendications 9 à 16 pour traiter ou désinfecter l'eau potable, en des quantités pondérales de 1 mg/l à 50 mg/l et de préférence de 10 mg/l à 40 mg/l d'eau potable.

19. Utilisation de l'agent selon l'une ou plusieurs des revendications 1 à 8 ou préparé selon l'une ou plusieurs des revendications 9 à 16 pour la désinfection ou le traitement de l'eau de piscine, en des quantités pondérales de 40 mg/l à 500 mg/l et de préférence de 45 mg/l à 200 mg/l d'eau de piscine.

20. Utilisation de l'agent selon l'une ou plusieurs des revendications 1 à 8 sous forme de comprimés compactés, sous forme de solides ou de granulés, pour la désinfection d'échangeurs d'ions.

21. Utilisation de l'agent selon l'une ou plusieurs des revendications 1 à 8, en des quantités pondérales de 10 mg/l à 200 mg/l et de préférence de 20 mg/l à 50 mg/l, pour le traitement de l'eau des aquariums.

22. Utilisation de l'agent selon l'une ou plusieurs des revendications 1 à 8 pour traiter la pâte à papier ou la cellulose dans des milieux aqueux.
